Europäisches Patentamt

European Patent Office

Office européen des brevets

(19)

(11) Numéro de publication: **0 067 761**
**B1**

(12) **FASCICULE DE BREVET EUROPEEN**

(45) Date de publication du fascicule du brevet:
11.09.85

(51) Int. Cl.⁴: **G 02 B 6/26**

(21) Numéro de dépôt: **82401024.3**

(22) Date de dépôt: **04.06.82**

(54) Dispositif de commutation entre fibres optiques.

(30) Priorité: **05.06.81 FR 8111148**

(43) Date de publication de la demande:
**22.12.82 Bulletin 82/51**

(45) Mention de la délivrance du brevet:
**11.09.85 Bulletin 85/37**

(84) Etats contractants désignés:
**AT BE CH DE FR GB IT LI LU NL SE**

(56) Documents cités:
**US - A - 4 079 230**
**US - A - 4 208 094**
**US - A - 4 261 638**

**L'ONDE ELECTRIQUE, vol. 59, no. 11, novembre 1979,**
**pages 13-14, Paris, FR, "Technologies de pointe pour la**
**commutation optique"**
**ELECTRO-OPTICAL SYSTEMS DESIGN, vol. 12, no. 6,**
**juin 1980, page 18, Chicago, US**

(73) Titulaire: **INSTRUMENTS S.A., 25, avenue de l'Opéra,**
**F-75001 Paris (FR)**

(72) Inventeur: **Laude, Jean-Pierre, 3 rue des Graveriots,**
**Saint-Cyr-La-Riviere F-91690 Saclas (FR)**

(74) Mandataire: **Phélip, Bruno et al, c/o Cabinet Harlé &**
**Phélip 21, rue de la Rochefoucauld, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne un dispositif de commutation d'un signal optique entre plusieurs fibres optiques de transmission. Elle pourra trouver une application particulièrement intéressante pour la commutation de lignes entre abonnés d'un réseau de télécommunications.

On observe actuellement un développement rapide des télécommunications par des systèmes optiques, c'est-à-dire des systèmes où les informations sont véhiculées par de la lumière transmise par des fibres optiques, alors que dans les systèmes encore les plus généralisés les informations sont véhiculées par des courants électriques transmis par des fils conducteurs.

Quel que soit le système utilisé, un problème important dans un réseau de télécommunications est celui de la commutation, c'est-à-dire celui de la mise en liaison sélective d'un poste d'abonné avec un poste particulier recherché parmi un nombre souvent considérable d'autres abonnés.

Dans les systèmes classiques à courants électriques on a connu des commutateurs rotatifs, et plus récemment des systèmes électromécaniques du type »cross-bar«, ou purement électroniques, conduisant toujours à assurer une continuité électrique entre deux conducteurs sélectionnés parmi de nombreux autres.

Dans les systèmes à signaux lumineux transmis par fibres optiques, on peut utiliser des commutateurs électroniques, mais leur réalisation pour travailler aux fréquences nécessaires est particulièrement difficile. On connaît aussi des dispositifs de commutation purement optique, consistant à mettre en liaison sélective directe deux fibres optiques déterminées sans passer par une transformation électronique intermédiaire.

Dans ce cas une solution est de procéder par déplacement matériel d'au moins une des fibres à connecter, de façon à amener le coeur de l'une rigoureusement en face du coeur de l'autre pour assurer la continuité de transmission de la lumière. Le brevet des Etats-Unis 4 204 744 présente une solution de cet ordre.

On peut aussi, entre les fibres à relier, utiliser des dispositifs de collimation et de refocalisation, avec des systèmes mobiles intermédiaires de prismes pour déplacer parallèlement à lui-même le faisceau parallèle, et par là le point final de refocalisation sur le coeur de la fibre réceptrice.

Mais tous ces dispositifs exigent des mouvements mécaniques de très haute précision. En effet le diamètre du coeur des fibres optiques les plus usuelles est compris entre 0,1 et 0,01 mm, et par exemple de l'ordre de 0,05 mm. Le positionnement relatif des fibres entre elles ou d'une fibre par rapport à son image doit donc être assuré avec une précision de l'ordre du micron. Les systèmes mécaniques pour assurer soit le déplacement des fibres elles-mêmes, soit le déplacement des prismes de déviation, sont donc particulièrement délicats à réaliser, et par là sont très onéreux.

La présente invention permet la réalisation d'un dispositif à mouvement mécanique simple de grande amplitude, dans lequel le précision mécanique de position de la pièce en mouvement est très facile à obtenir, tout en assurant un rendement élevé de transmission lumineuse entre les fibres ainsi raccordées.

L'invention concerne donc un dispositif de commutation entre fibres optiques, en vue d'assurer la continuité de transmission de lumière entre l'extrémité d'une première fibre et l'extrémité de l'une quelconque d'un groupe d'autres fibres.

Selon l'invention l'extrémité de la première fibre est disposée au centre d'un miroir sphérique, tandis que les extrémités des autres fibres sont disposées symétriquement par rapport à celle de la première, dans le plan perpendiculaire à l'axe du miroir passant par son centre, et le dispositif comporte, sur le trajet optique entre les fibres et le miroir, au moins un organe de déviation optique, avec des moyens pour faire tourner ledit organe de déviation sur lui-même autour de l'axe du miroir.

Selon une forme particulière de l'invention, le dispositif comporte un seul organe de déviation constitué par une lame transparente prismatique de petit angle, et la première fibre est au centre d'un cercle où sont réparties les autres fibres.

L'invention sera mieux comprise en se référant à un mode de réalisation particulier, donné à titre d'exemple et illustré par les dessins annexés.

La figure 1 est une vue perspective schématique du dispositif.

La figure 2 en est un schéma optique.

La figure 3 illustre, dans un cas particulier de répartition des fibres, les conséquences d'un léger décalage de position angulaire de la lame prismatique tournante.

La figure 4 est une représentation très simplifiée d'un appareil réalisé selon l'invention.

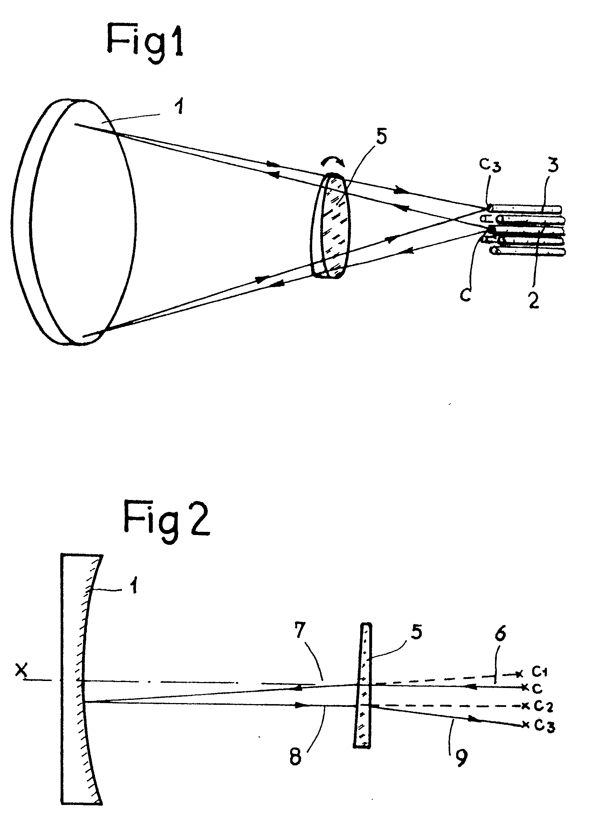

En se référant tout d'abord aux figures 1 et 2, on verra que le dispositif comporte un miroir sphérique concave 1, dont le centre de courbure C est à l'extrémité d'une fibre optique particulière 2. La fibre 2 est au centre d'un paquet d'autres fibres telles que 3 régulièrement réparties autour de la fibre centrale 2. Le signal porté par la lumière émise à l'extrémité de la fibre 2 doit être transmis sélectivement à l'une ou l'autre des autres fibres 3. Pour celà une lame transparente prismatique 5 de petit angle est interposée entre le miroir 1 et les fibres 2, 3. La lame 5 pourra présenter par exemple un angle de l'ordre de 5°, et sera de préférence traités anti-reflets.

On voit plus particulièrement sur la figure 2 qu'un rayon 6 issu de C à l'extrémité de la fibre 2 est d'abord dévié selon 7 par la lame 5, en provenance de l'image virtuelle $C_1$ de C située dans le plan normal à l'axe X du miroir et passant par le centre C. Le rayon 7 est réfléchi selon 8 par le miroir, vers $C_2$ symétrique de $C_1$ par rapport à C, puis à nouveau dévié selon 9 par la lame 5 vers $C_3$ situé approximativement au symétrique de C par rapport à $C_2$. Le choix de l'angle de la lame 5 et de sa position le long de l'axe X permet d'obtenir une déviation finale $CC_3$ qui corresponde à la distance entre coeurs des fibres 2 et 3.

En faisant tourner la lame 5 sur elle-même autour de l'axe X, on pourra faire tourner l'image $C_3$ de C sur un cercle de centre C et de rayon $CC_3$, et par conséquent en choisissant sélectivement la position angulaire de la lame 5 on pourra envoyer sur la fibre 3 choisie le faisceau lumineux émis par la fibre 2. A l'inverse on pourra aussi envoyer sur la fibre 2 l'un quelconque des signaux en provenance de l'une quelconque des fibres 3.

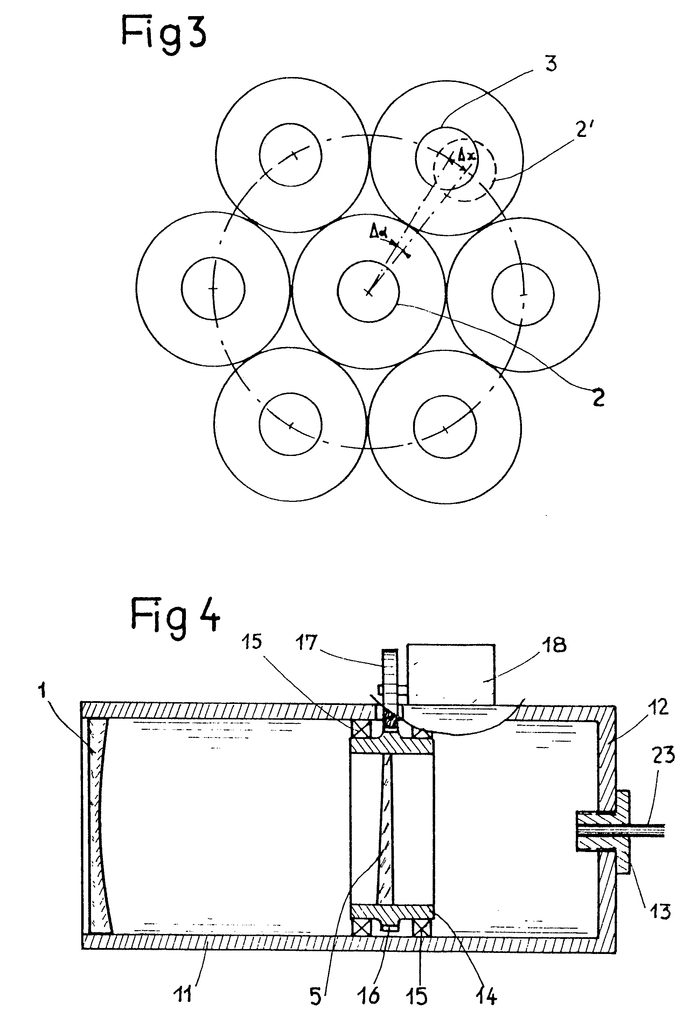

La figure 3 représente une disposition relative particulièrement intéressante de la fibre 2 et des autres fibres 3. En groupant sept fibres de même diamètre extérieur, avec une fibre centrale entourée de six fibres périphériques, on sait que tous les contours externes des fibres sont jointifs, et la répartition angulaire régulière des fibres périphériques est automatiquement assurée avec précision par un simple bridage extérieur du faisceau de fibres.

Il est intéressant de rechercher le degré de précision à respecter dans la position angulaire de la lame 5 pour que le rendement de transmission lumineuse soit important; ce calcul est plus simple dans le cas particulier de la configuration de la figure 3, où l'on supposera que l'on utilise des fibres identiques de type tout à fait usuel avec un diamètre extérieur de la gaine de 0,125 mm pour un diamètre de coeur de 0,05 mm.

On a représenté en traits interrompus en 2' l'image du coeur 2 de la fibre centrale après réflexion sur le miroir 1 et deux déviations par la lame 5. Si la position angulaire de la lame 5 est rigoureusement correcte, l'image 2' coïncidera rigoureusement avec le coeur 3, et la totalité de la lumière issue de la fibre 2 sera captée et retransmise par le coeur de la fibre 3, ou inversement, assurant le rendement maximum de transmission. Mais s'il existe un écart angulaire $\Delta\alpha$ entre la position théorique et la position réelle de la lame 5 il existera aussi un décalage entre les surfaces circulaires 2' et 3 avec un écart linéaire $\Delta\alpha$ entre centres égal à 0,125 $\Delta\alpha$ mm. Le rendement de transmission du dispositif sera alors proportionnel à la surface commune des deux cercles 2' et 3. On peut facilement établir, dans les conditions numériques ci-dessus, qu'un écart angulaire de l'ordre de 2,5° pour la lame 5 n'entraîne qu'une perte de transmission de lumière de l'ordre de 6%. Il est donc très facile d'assurer un rendement de transmission élevé même avec une large tolérance angulaire qui ne nécessitera que des ensembles mécaniques simples et peu onéreux.

La figure 4 donne de façon très globale un exemple de ce que pourra être un tel ensemble mécanique; on n'a pas cherché, dans ce dessin volontairement très simplifié, à représenter les détails de réalisation technologique usuels qui sont à la portée d'un technicien moyen dans ce domaine.

L'appareil est ici constitué par un tube 11 fermé par un fond 12 au centre duquel est vissé un bouchon 13 portant le faisceau 23 de fibres. Le miroir 1 est serti à l'autre extrémité ouverte du tube 11. La lame 5 est portée par une douille 14 tournant librement à l'intérieur du tube 11 sur les roulements 15. La douille 14 comporte une denture extérieure 16 en prise avec un pignon d'entrainement 17 qui passe dans une lumière de la paroi du tube. Le pignon 17 est entraîné par un bloc moto-réducteur 18, muni de moyens usuels de commande et d'indexation angulaire pour immobiliser la douille 14 et la lame 5 dans les positions angulaires choisies.

Bien entendu l'invention n'est pas strictement limitée au mode de réalisation qui vient d'être décrit à titre d'exemple, mais elle couvre aussi les réalisations qui n'en différeraient que par des détails, par des variantes d'exécution ou par l'utilisation de moyens équivalents.

Ainsi, et si comme c'est généralement le cas pour les télécommunications, on utilise de la lumière monochromatique, on pourra utiliser un réseau de diffraction par transmission à la place de la lame prismatique, ce qui conduira au même effet de déviation.

On pourrait aussi utiliser en série deux organes déviateurs, réseaux ou lames prismatiques, de mêmes caractéristiques mais inversées, et les faire tourner en synchronisme angulaire mais de sens contraire; le déplacement de l'image 2' du coeur de la fibre 2 serait alors rectiligne. Il suffirait de placer les diverses fibres 3 en ligne symétriquement de part et d'autre de la fibre 2, et toujours dans le plan perpendiculaire à l'axe X du miroir.

Enfin le même apparail décrit comme un commutateur avec arrêt de la lame 5 en des positions angulaires déterminées, pourra aussi être utilisé en multiplexage temporel, par mise en rotation continue de la lame prismatique.

## Revendications

1. Dispositif de commutation entre fibres optiques, en vue d'assurer la continuité de transmission de lumière entre l'extrémité d'une première fibre (2) et l'extrémité de l'une quelconque d'un groupe d'autres fibres (3),

caractérisé par le fait que l'extrémité de la première fibre (2) est disposée au centre (C) d'un miroir sphérique (1), tandis que les extrémités des autres fibres (3) sont disposées symétriquement par rapport à celle de la première, dans le plan perpendiculaire à l'axe (X) du miroir et passant par son centre (C),

et par le fait que le dispositif comporte, sur le trajet optique entre les fibres (2, 3) et le miroir (1), au moins un organe de déviation optique par transmissions (5), avec des moyens (17, 18) pour faire tourner ledit organe de déviation sur lui-même autour de l'axe du miroir.

2. Dispositif selon revendication 1, caractérisé par le fait qu'il comporte un seul organe de déviation (5), et par le fait que les extremités des autres fibres (3) sont réparties sur un cercle centré sur la première fibre (2).

3. Dispositif selon revendication 1, caractérisé par le fait qu'il comporte deux organes de déviation optique à caractéristiques de déviation opposées, chaque organe étant entrainé en synchronisme angulaire mais de sens inverse, et par le fait que les extremités des autres fibres (3) sont réparties en ligne droite de part et d'autre de la première fibre (2).

4. Dispositif selon l'une quelconque des revendications 1 à 3, caractérisé par le fait que chaque organe de déviation est une lame transparente (5) prismatique de petit angle.

5. Dispositif selon l'une quelconque des revendications 1 à 3, dans le cas où l'on utilise une lumière monochromatique, caractérisé par le fait que chaque organe de déviation est un réseau de diffraction par transmission.

## Patentansprüche

1. Kommutationsvorrichtung zwischen Faseroptiken, um die Kontinuität der Übertragung von Licht zwischen dem Ende einer ersten Faser bzw. Faseroptik (2) und dem Ende irgendeiner Faser bzw. Faseroptik (3) aus einer Gruppe anderer Fasern bzw. Faseroptiken zu gewährleisten, dadurch gekennzeichnet, daß das Ende der ersten Faser (2) im Mittelpunkt (C) eines sphärischen Spiegels (1) angeordnet ist, während die Enden der anderen Fasern (3) symmetrisch in bezug auf das Ende der ersten Faser in der Ebene angeordnet sind, die lotrecht zur Achse (X) des Spiegels und durch dessen Mittelpunkt (C) verläuft und daß die Vorrichtung auf der optischen Bahn zwischen den Fasern (2, 3) und dem Spiegel (1) wenigstens ein Organ (5) für eine optische Ablenkung bei Durchstrahlung mit Einrichtungen (17, 18) aufweist, um das Ablenkungsorgan um sich selbst um die Achse des Spiegels zu drehen.

2. Vorrichtung nach Anspruch 1, dadurch gekennzeichnet, daß sie ein einzelnes Ablenkungsorgan (5) aufweist, und daß die Enden der anderen Fasern (3) auf einem Kreis verteilt sind, der auf der ersten Faser (2) zentriert ist.

3. Vorrichtung nach Anspruch 1, dadurch gekennzeichnet, daß sie mit zwei optischen Ablenkungsorganen mit entgegengesetzten Ablenkungseigenschaften versehen ist, wobei jedes Organ winkelsynchron, jedoch in entgegengesetztem Sinn angetrieben wird, und daß die Enden der anderen Fasern (3) in gerader Linie beiderseits der ersten Faser (2) verteilt sind.

4. Vorrichtung nach einem der Ansprüche 1 bis 3, dadurch gekennzeichnet, daß jedes Ablenkungsorgan ein einen kleinen Winkel aufweisendes transparentes prismatisches Blättchen (5) ist.

5. Vorrichtung nach einem der Ansprüche 1 bis 3, für den Fall, daß ein monochromatisches Licht verwendet wird, dadurch gekennzeichnet, daß jedes Ablenkungsorgan ein Beugungsgitter ist.

## Claims

1. Device for switching between optical fibres, with a view to ensuring the continuity of light transmission between the end of a first fibre (2) and the end of any one of a group of other fibres (3), characterised in that the end of the first fibre (2) is arranged in the centre (C) of a spherical mirror (1), while the ends of the other fibres (3) are arranged symmetrically relative to that of the first, in the plane at right angles to the axis (X) of the mirror and passing through its centre (C), and in that the device incorporates, in the optical path between the fibres (2, 3) and the mirror (1), at least one device for optical deflection by transmission (5), with means (17, 18) for rotating the said deflecting device around the axis of the mirror.

2. Device according to Claim 1, characterised in that it comprises a single deflecting device (5), and in that the ends of the other fibres (3) are distributed on a circle centred on the first fibre (2).

3. Device according to Claim 1, characterised in that it incorporates two devices for optical deflection with opposite deflection characteristics, each device being driven in angular synchronisation but in reverse direction, and in that the ends of the other fibres (3) are distributed in a straight line on either side of the first fibre (2).

4. Device according to any one of Claims 1 to 3, characterised in that each deflecting device is a lowangle prismatic transparent plate (5).

5. Device according to any one of Claims 1 to 3, in the case where monochromatic light is employed, characterised in that each deflecting device is a grating for defraction by transmission.

# Fig 1

# Fig 2

# Fig 3

# Fig 4